# FASCICULE DE BREVET EUROPEEN

(11) **EP 2 900 499 B1**
(45) Date de publication et mention de la délivrance du brevet: **04.03.2020**
(21) Numéro de dépôt: 13782739.0
(22) Date de dépôt: 24.09.2013
(51) Int. Cl.: B60J 10/265, B60J 10/26, B60J 10/27, B60J 10/30, B60J 10/32, B60J 10/36, B60J 10/70

(54) **VITRAGE A JOINT PROFILÉ ENCAPSULÉ ET PIÈCE RAPPORTÉE FIXÉE AU JOINT, ÉLÉMENT DE FIXATION DE LA PIÈCE RAPPORTÉE POUR LE VITRAGE ET PROCÉDÉ DE FABRICATION DU VITRAGE.**
VERGLASUNG MIT VERKAPSELTER PROFILDICHTUNG UND ANGESCHLOSSENER KOMPONENTE AN DER DICHTUNG, BEFESTIGUNGSELEMENT FÜR DIE VERGLASUNG BEFESTIGTER KOMPONENTEN UND VERFAHREN ZUR HERSTELLUNG DER VERGLASUNG
GLAZING WITH ENCAPSULATED PROFILED SEAL AND ATTACHED COMPONENT FIXED TO THE SEAL, FIXING ELEMENT FOR THE GLAZING ATTACHED COMPONENT AND METHOD OF MANUFACTURING THE GLAZING

(30) Priorité: 25.09.2012 FR 1258981
(43) Date de publication de la demande: 05.08.2015
(73) Titulaire: Saint-Gobain Glass France, 92400 Courbevoie (FR)
(72) Inventeur: GRANDGIRARD, Bastien, F-60490 Marqueglise (FR); COUTELLIER, Nicolas, 60150 Thourotte (FR); GONNET, Romain, F-60610 Lacroix Saint Ouen (FR); MACHIZAUD, Yoann, 13400 Aubagne (FR)
(74) Mandataire: Saint-Gobain Recherche
(86) Numéro de dépôt international: PCT/FR2013/052225
(87) Numéro de publication internationale: WO 2014/049256

(56) Documents cités:
- EP-A2- 0 466 504
- DE-A1-102005 054 721
- DE-U1-202008 011 772
- JP-A- S63 203 443
- US-A- 5 561 003
- US-A1- 2003 075 949

## Description

La présente invention concerne un élément de fixation d'une pièce rapportée, telle qu'un enjoliveur, sur un vitrage, notamment un vitrage utilisé sur un véhicule, comme connu du document EP 0 466 504 A2. La présente invention concerne également les vitrages mettant en œuvre un tel élément de fixation et le procédé de fabrication du vitrage correspondant.

Dans tout le présent document, l'expression « pièce rapportée » désigne un accessoire du vitrage, en particulier un accessoire de forme allongée ; elle ne désigne pas un élément de carrosserie de véhicule.

On sait que pour améliorer sur le plan esthétique certains vitrages, notamment les vitrages utilisés dans le domaine automobile, on fait appel à des enjoliveurs qui sont habituellement constitués de profilés qui viennent se fixer par clipage sur des clips qui sont attachés à un cordon profilé, réalisés par exemple en un polymère souple, qui est surmoulé sur chaque vitrage, notamment en périphérie de ce dernier.

On connaît par la demande internationale N° WO 2007/003823, un dispositif de fixation intermédiaire du type de celui précédemment décrit.

Selon ce document, la partie de coopération amont comporte au moins un élément mâle saillant ou un élément femelle creux, cet élément coopérant respectivement avec un élément femelle creux ou un élément mâle saillant correspondant ménagé dans le cordon profilé, ledit élément femelle creux présentant des dimensions intérieures au moins partiellement inférieures aux dimensions extérieures dudit élément mâle saillant.

Cette coopération est ainsi du type « tenon-mortaise » avec un effet de frottement entre une partie au moins des surfaces des éléments.

Un avantage important de ce dispositif par rapport au précédent réside dans la fiabilité du système de fixation : il permet un maintien fiable du profilé enjoliveur y compris dans des conditions extrêmes notamment de vibration.

Toutefois, ce système complexifie la conception du cordon profilé et oblige à concevoir un cordon profilé particulier qui présente des zones mâles ou femelles particulières.

En outre, ce système ne donne pas entièrement satisfaction lorsque la pièce rapportée présente une forme complexe.

En effet, avec ce système et avec les autres systèmes de l'art antérieur, il est possible de cliper une pièce rapportés s'étendant selon un ou deux bords du vitrage, mais il est très difficile de cliper une pièce rapportée s'étendant selon au moins trois bords du vitrage.

L'art antérieur connaît par ailleurs de la demande de brevet N° DE 10 2005 054 721 un système de fixation d'une pièce rapportée à l'aide d'un élément de fixation dont deux têtes distinctes passent au travers du cordon profilé pour venir retenir, chacune, suivant leur largeur, une aile de retenue de la pièce rapportée.

Ce système est particulier en ce que la largeur de l'élément de fixation au niveau de ses têtes est supérieure à la largeur du trou du cordon profilé ; cette largeur de l'élément de fixation au niveau de ses têtes doit donc passer « en force » par le trou, en forçant la flexibilité du tronc d'une des têtes.

Ce système n'est pas suffisamment fiable car il repose sur deux caractéristiques contradictoires : il faut que la distance entre les extrémités des deux têtes suivant leur largeur (c'est-à-dire la largeur de l'élément de fixation au niveau de ses têtes) soit suffisamment grande pour maintenir au mieux les ailes de retenue, mais il ne faut pas que cette distance soit trop grande pour pouvoir passer les deux têtes par la largeur du trou dans le cordon profilé.

Si la largeur de l'élément de fixation au niveau de ses têtes est grande, la pièce rapportée sera bien maintenue mais il sera très difficile de retirer l'élément de fixation ; à l'inverse, si la largeur de l'élément de fixation au niveau de ses têtes est petite, l'élément de fixation est facile à retirer mais la pièce rapportée ne sera pas suffisamment bien maintenue.

L'art antérieur connaît en outre de la demande de brevet européen N° EP 466 504, un élément de fixation d'une pièce rapportée pour un vitrage, ledit élément de fixation présentant une base, une tête et un tronc disposé entre cette base et cette tête. La base de cet élément de fixation est épaisse et comporte deux sillons destinés à accueillir et retenir, chacun, une projection située en face intérieure de la portion de joint profilé.

La présente invention a pour but de remédier aux inconvénients de la technique antérieure en proposant un élément de fixation permettant de fixer, avec précision et efficacité et d'une manière amovible, sur un cordon profilé d'un vitrage au moins un élément rapporté, notamment un enjoliveur, présentant une forme complexe en utilisant au moins un élément intermédiaire fixé de manière amovible (c'est-à-dire non définitive), à la pièce rapportée.

La présente invention a pour but en particulier de permettre une fixation rapide et fiable d'une pièce rapportée, et notamment une pièce rapportée complexe, sans toutefois que cette pièce rapportée ne soit trop complexe, ni que l'élément de fixation ne soit trop complexe.

La présente invention repose ainsi sur une solution où la pièce intermédiaire se présente sous la forme d'une clé dont une partie est passée à travers un trou ménagé dans le cordon profilé, cette partie venant ensuite retenir les ailes de la pièce rapportée par rotation de la pièce intermédiaire sur elle-même.

La présente invention se rapporte ainsi à un vitrage selon la revendication 1. Ce vitrage comprend un élément vitré, au moins une portion de joint profilé, au moins une pièce rapportée telle qu'un enjoliveur, et au moins un élément de fixation pour la fixation de ladite pièce rapportée à ladite portion de joint profilé, ladite pièce rapportée présentant une face intérieure comportant des ailes de retenue. Ces ailes de retenue sont disposées le long de deux bords longitudinaux opposés de la face intérieure de la pièce rapportée.

Selon l'invention, ladite portion de joint profilé comporte sous ladite pièce rapportée au moins un trou débouchant sur une face intérieure et sur une face extérieure dudit joint, ledit trou étant plus long que large, ledit élément de fixation présente une base qui est unique, une tête qui est unique et un tronc qui est unique et qui est disposé entre cette base et cette tête, avec :
- le tronc moins large ou aussi large que la largeur du trou
- la tête moins large que la largeur du trou selon une première direction et moins longue que la longueur du trou tout en étant plus longue que la largeur du trou selon une seconde direction
- la base plus large que la largeur du trou selon ladite première direction et selon ladite seconde direction
- ladite première direction et ladite seconde direction étant dans un même plan et de préférence perpendiculaires dans ce plan
- la largeur de la tête qui est inférieure à la distance entre les extrémités latérales des ailes de retenue afin de pouvoir passer cette largeur entre ces ailes et
- la longueur de la tête qui est supérieure à la distance entre les extrémités latérales des ailes de retenue afin ladite tête retienne selon sa longueur lesdites ailes de retenue (et donc la pièce rapportée) en direction de la surface extérieure de ladite portion de joint profilé.

Selon l'invention, ledit trou présente en surface intérieure deux creux, de préférence, en vis-à-vis selon la largeur dudit trou, afin de réaliser une zone d'accueil pour la base de l'élément de fixation qui soit en retrait en direction de la pièce rapportée ; ainsi, la base, et par voie de conséquence la pièce rapportée, se trouve bloquée en rotation lorsqu'elle est située dans cette zone d'accueil.

Ainsi suivant l'invention, en passant la tête de l'élément de fixation par le trou ménagé dans le cordon profilé, puis en passant la largeur de la tête entre les ailes de retenue, puis en tournant l'élément de fixation sur lui-même, la longueur de la tête se trouve en vis-à-vis des ailes de retenue de la pièce rapportée et la longueur de la tête vient retenir les ailes de la pièce rapportée.

Pour une bonne fixation de la pièce rapportée, il est préférable en outre que la hauteur du tronc de l'élément de fixation soit égale à la distance entre les ailes de retenue et le trou qui est sur la face intérieure dudit joint.

La fixation amovible de la pièce rapportée est précise et fiable, même si la pièce rapportée présente une forme complexe.

Dans une variante de l'invention, ledit tronc de l'élément de fixation présente un axe et il présente une forme circulaire en coupe perpendiculairement à cet axe ; ainsi, le tronc peut tourner sans difficulté dans le trou ménagé dans le cordon profilé.

Dans une autre variante encore, indépendante, le trou présente un pourtour réalisé par une pièce de pourtour différente dudit joint profilé.

Dans cette variante, ladite pièce de pourtour présente deux creux en surface intérieure, qui sont tous les deux de préférence en vis-à-vis selon la largeur dudit trou et ladite pièce de pourtour présente deux creux en surface extérieure, qui sont tous les deux de préférence en vis-à-vis selon la largeur dudit trou.

Dans une variante indépendante toute particulière, ladite pièce rapportée présente une forme générale d'arc ou de U avec une partie centrale et une partie en retour à chaque extrémité de la partie centrale (qui s'étendent dans la même direction et le même sens) et ledit vitrage comporte au moins deux trous et au moins deux pièces rapportées avec au moins une paire trou / pièce rapportée pour chaque partie en retour.

La présente invention se rapporte aussi à un procédé de fabrication d'un vitrage suivant la revendication 7.

Selon ce procédé, ladite tête dudit élément de fixation est passée par le trou de ladite portion de joint profilé, puis l'élément de fixation est tourné sur lui-même.

De préférence, pour passer ladite tête dans ledit trou, ladite tête est introduite par le trou en surface intérieure pour ressortir par le trou en surface extérieure.

De préférence encore, l'élément de fixation est tourné sur lui-même d'un angle de 90 °.

On décrira ci-après, à titre d'exemples non limitatifs, plusieurs formes d'exécution de la présente invention, en référence aux dessins annexés sur lequel :
- la figure 1 illustre une vue en coupe d'un vitrage selon l'invention lorsque la tête de l'élément de fixation est introduite le trou ménagé dans le cordon profilé ;
- la figure 2 est une vue en coupe du même vitrage qu'en figure 1 après que l'élément de fixation ait été tourné sur lui-même pour retenir la pièce rapportée par ses ailes de retenues ;
- la figure 3 est une vue en perspective de l'élément de fixation utilisé en figures 1 et 2 ;
- la figure 4 est une vue en perspective équivalente à la figure 1, vue du dessus partielle du cordon profilé, sans la pièce rapportée ; et
- la figure 5 est une vue en perspective équivalente à la figure 2, vue du dessus partielle du cordon profilé, sans la pièce rapportée.

Dans ces figures, les proportions entre les différents éléments sont respectées sur chaque figure mais les éléments en arrière-plan ne sont en général pas représentés, afin de faciliter leur lecture.

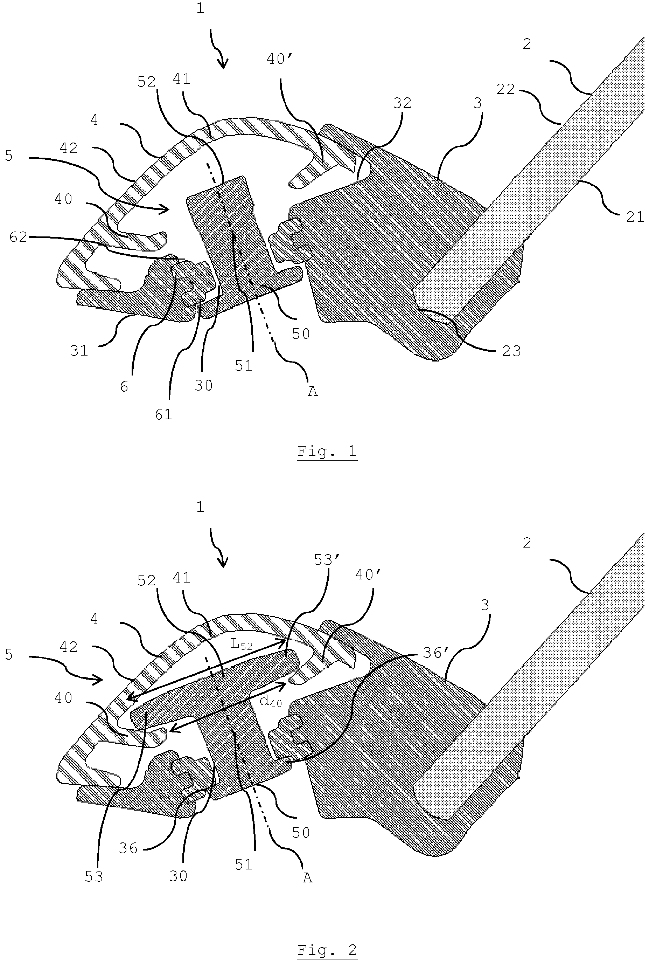

La présente invention se rapporte à un vitrage 1, et notamment un vitrage de véhicule tel que celui visible sur les figures 1 et 2, comprenant un élément vitré 2, au moins une portion de joint profilé 3 fixée à l'élément vitré, au moins une pièce rapportée 4 telle qu'un enjoliveur, et au moins un élément de fixation 5 pour la fixation de ladite pièce rapportée 4 à ladite portion de joint profilé 3 et donc au vitrage.

Le vitrage 1 selon l'invention qui est illustré en figures 1 et 2 est un vitrage latéral arrière fixe d'une automobile (custode arrière). Il comporte un élément vitré 2 qui est muni d'une portion d'un cordon/joint profilé 3 en un matériau polymère souple qui fait tout le tour de l'élément vitré 2.

Le vitrage 1, qui comporte éventuellement un (ou des) accessoire(s) et notamment un (ou des) accessoire(s) de fixation du vitrage, est destiné à fermer une baie réalisant une séparation entre un espace intérieur du véhicule et un espace extérieur au véhicule. L'élément vitré 2 présente ainsi une face intérieure 21, destinée à être tournée vers l'espace intérieur, une face extérieure 22 destinée à être tournée vers l'espace extérieur, ainsi qu'un chant 23 périphérique.

L'élément vitré peut être monolithique, c'est-à-dire constitué d'une feuille de matière unique, ou être composite, c'est-à-dire constitué de plusieurs feuilles de matière entre lesquelles est insérée au moins une couche de matière adhérente dans le cas des vitrages feuilletés. La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie une bande d'ornementation (non illustrée).

Lorsque l'élément vitré est en matière organique, il a été fabriqué préalablement à la mise en œuvre de l'invention par moulage de la matière constitutive de l'élément vitré dans un dispositif de moulage comportant un moule comportant au moins une partie fixe de moule et une partie mobile de moule qui est mobile par rapport à la partie fixe de moule, lesdites parties de moule coopérant à l'état fermé du moule, pendant l'étape de moulage, pour former une cavité de moulage présentant en coupe la forme en coupe de l'élément vitré. Souvent, l'élément vitré en matière organique n'est pas plat mais bombé.

Lorsque l'élément vitré est en matière minérale, il a été fabriqué préalablement à la mise en œuvre de l'invention par fusion de matière minérale en une feuille plate, puis par découpe de cette feuille et éventuellement bombage et/ou trempe de cette feuille.

Sur les figures 1 et 2, l'élément vitré 2 est un vitrage monolithique.

Le vitrage illustré en figure 1 est un vitrage fixe, mais la présente invention peut aussi s'appliquer à un vitrage mobile.

La portion de joint profilé 3 présente ainsi une partie intérieure 31 qui est destinée à être orientée vers l'intérieur du véhicule, ainsi qu'une partie extérieure 32 qui est destinée à être orientée vers l'extérieur du véhicule.

Le matériau polymère constitutif du cordon profilé 3 peut être un thermoplastique (PVC, TPE, ...), un polyuréthanne ou encore un caoutchouc synthétique du type EPDM ou toute autre matière adéquate.

Le cordon profilé 3 est fabriqué par mise en œuvre d'un procédé de fabrication appelé « encapsulation » car il comporte une étape de moulage du cordon profilé 3 dans un dispositif de moulage, entre deux éléments de moulage, un élément de moulage accueillant la face intérieure du vitrage et un élément de moulage accueillant la face extérieure du vitrage, ces deux éléments de moulage étant refermés l'un sur l'autre pendant l'étape de moulage tout en réalisant entre eux une cavité de moulage qui est remplie de la matière constitutive du cordon profilé pendant l'étape de moulage de ce cordon.

Le cordon profilé 3 est, de préférence, disposé sur toute la périphérie du vitrage 1 mais ce cordon profilé pourrait tout à fait n'être positionné que sur une partie de la périphérie du vitrage ou sur une partie quelconque du vitrage.

Sur ces figures 1 et 2, la pièce rapportée 4 recouvre ainsi une portion de la surface de la partie extérieure 32 du joint profilé.

C'est pour améliorer l'aspect esthétique du vitrage, qu'une partie du cordon profilé 3 visible de l'extérieur du véhicule est masquée par la pièce rapportée 4 constituée ici d'un profilé enjoliveur.

La pièce rapportée est préfabriquée : elle a été fabriquée, et éventuellement mise en forme, préalablement à sa fixation au vitrage. Elle peut être en aluminium, alliage d'aluminium, acier et notamment acier inoxydable, matière plastique et notamment matière plastique renforcée de charge comme par exemple de charges minérales à base de silice ou de fibres de verre. Elle peut aussi être réalisée en plusieurs parties, avec éventuellement des matériaux différents pour au moins deux parties.

En considérant que le vitrage arrière fixe est positionné d'une manière sensiblement verticale, la pièce rapportée est allongée suivant la largeur du véhicule et s'étend à la fois sur le côté droit et gauche du véhicule. La pièce apportée présente ainsi une forme complexe : elle présente une forme générale d'arc ou de U avec une partie centrale et une partie en retour à chaque extrémité de la partie centrale ces parties en retour s'étendent dans la même direction et le même sens : l'une sur le côté latéral gauche du véhicule et l'autre sur le côté latéral droit du véhicule.

Suivant l'invention l'élément de fixation 5 présente une base 50, une tête 52 et un tronc 51 disposé entre cette base et cette tête, avec à la fois :
- le tronc 51 moins large ou aussi large que la largeur l₃₀ du trou 30,
- la tête 52 moins large que la largeur l₃₀ du trou 30 selon une première direction correspondant ici à la largeur de la pièce rapportée et moins longue que la longueur L₃₀ du trou 30 tout en étant plus longue que la largeur l₃₀ du trou 30 selon une seconde direction correspondant ici à la longueur de la pièce rapportée, , afin que la tête puisse passer complètement par le trou 30 et
- la base 50 plus large que la largeur l₃₀ du trou 30 à la fois selon ladite première direction et selon ladite seconde direction, afin que la base ne puisse pas du tout passer par le trou 30
- la largeur l₅₂ de la tête 52 est inférieure à la distance d₄₀ entre les extrémités latérales des ailes de retenue 40, 40' afin de pouvoir passer entre ces deux ailes et
- la longueur L₅₂ de la tête 52 est supérieure à la distance d₄₀ entre les extrémités latérales des ailes de retenue 40, 40' afin de pouvoir retenir les ailes, et donc la pièce rapportée, en direction de la surface extérieure 32 de ladite portion de joint profilé.

Ici, la première direction et la seconde direction considérées sont dans un même plan et sont perpendiculaires dans ce plan.

La longueur du trou 30 n'est pas illustrée en figures 1 et 2 ; c'est la largeur qui est illustrée. La longueur du trou est selon la longueur de la pièce rapportée.

Lorsque le tronc 51 est aussi large que la largeur l₃₀ du trou 30, cela signifie que lors de la rotation de l'élément de fixation les parois extérieures du tronc vont frotter contre les parois du trou 30 adjacentes, ce qui n'est pas forcément un problème.

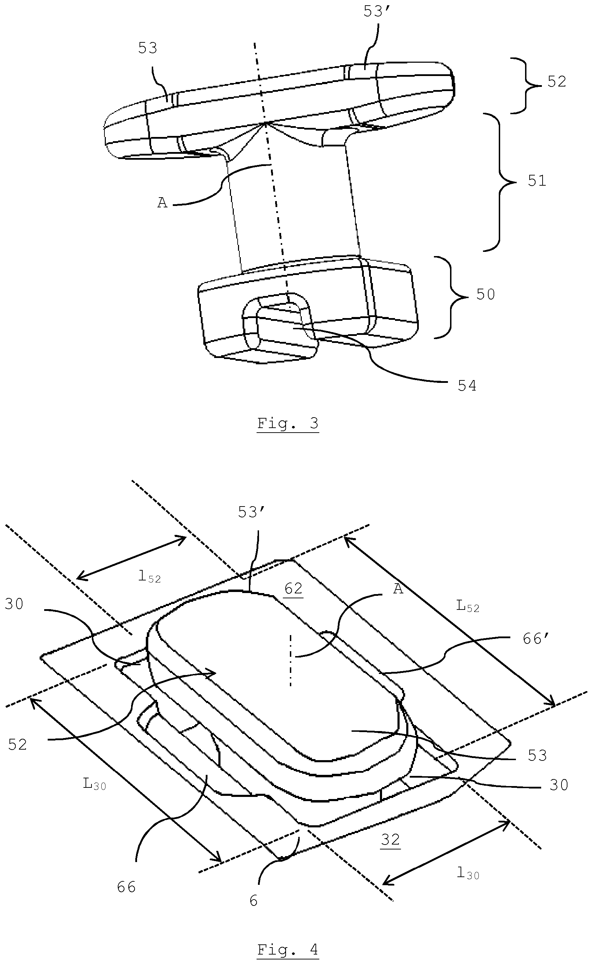

Un exemple de réalisation d'un élément de fixation 5 selon l'invention, pour le montage de la pièce rapportée 4 sur une portion du cordon profilé 3 est illustré en figure 3. Dans ce mode de réalisation de l'invention qui est représenté sur les figures 1 à 3, l'élément de fixation est constitué d'un clip en matière plastique, fabriqué par moulage.

En comparant les figures 1 et 2, chacun peut constater que :
- dans une première section verticale de l'élément de fixation 5, visible en figure 1, la tête 52 est à peu près aussi large que le tronc 51 et la base 50 est plus large que le tronc 51 afin que ledit élément de fixation 5 présente en coupe verticale selon cette section une forme de T inversé ; ainsi, il est possible de passer la tête 52 ainsi qu'une partie du tronc 51 dans le trou 30, mais il n'est pas possible de passer la base 50 car la base est plus large que la largeur du trou ;
- dans une seconde section verticale de l'élément de fixation 5, visible en figure 2 et qui est perpendiculaire à la première, la base 50 et la tête 52 sont toutes les deux plus larges que le tronc 51 afin que ledit élément de fixation 5 présente en coupe verticale selon cette première section une forme de I ; ainsi, l'élément de fixation peut tourner sur lui-même et la tête 52 venir au-dessus des ailes 40, 40' pour les retenir en direction de la surface extérieurs 32 du cordon profilé et il n'est pas possible de passer la base 50 car la base est plus large que la largeur du trou.

Cette figure 2 montre plus particulièrement que la distance entre la tête et la base de l'élément de fixation est telle que la tête plaque la pièce rapportée contre la surface extérieure 32 en prenant appui, grâce à la base à la périphérie intérieure du trou 30, contre la surface intérieure 31.

Dans cette position, l'élément de fixation est en permanence sous l'influence de contraintes internes en traction ; c'est ce qui permet d'assurer la pérennité de la fixation.

Pour empêcher la rotation en retour de l'élément de fixation, le trou 30 présente en surface intérieure 31 deux creux 36 ; 36' en vis-à-vis selon la largeur du trou 30 ; ainsi, ces creux maintiennent la base 50 dans la même position de l'espace en s'opposant à ce que la base 50 tourne et qu'ainsi la tête 52 libère les ailes 40, 40'.

Au regard du mode de fabrication du cordon profilé, il peut être difficile de réaliser un trou avec la précision requise.

Dans ce cas, il est alors préférable d'utiliser une pièce de pourtour 6 qui va réaliser le pourtour du trou 30, aussi bien en surface intérieure 31, qu'en surface extérieure 32 et entre ces deux surfaces.

Avantageusement, la pièce de pourtour peut être moulée en même temps que le cordon profilé 3, en disposant dans le pour d'encapsulation une pièce de pourtour 6 à l'endroit adéquat avant l'injection de la matière formant le cordon profilé. La pièce de pourtour 6 peut être par exemple en métal ou en alliage métallique.

Lorsque la pièce de pourtour 6 est présente, il est préférable que ce soit elle qui comporte l'équivalent des creux 36, 36'.

Dans ce cas, pour éviter d'avoir à préciser un sens dessus/dessous pour la pièce 6 lors de son introduction dans le moule, il est préférable que la pièce de pourtour 6 présente deux creux en vis-à-vis en surface intérieure 61 et deux creux 66 ; 66' en vis-à-vis en surface extérieure 62.

Pour mettre en place l'enjoliveur il faut d'abord le présenter, comme visible en figure 1 au-dessus du cordon profilé 3 et en butée inférieure contre la surface extérieure 32 du cordon profilé.

Ensuite, il faut saisir l'élément de fixation 5 et introduire la tête 52 dans le trou 30, en introduisant la tête 52 par la surface intérieure 31 afin qu'elle ressorte par la surface extérieure 32. Pour faire cela, il faut que les branches 53 soient positionnées correctement vis-à-vis de trou 30, comme visible en figure 4.

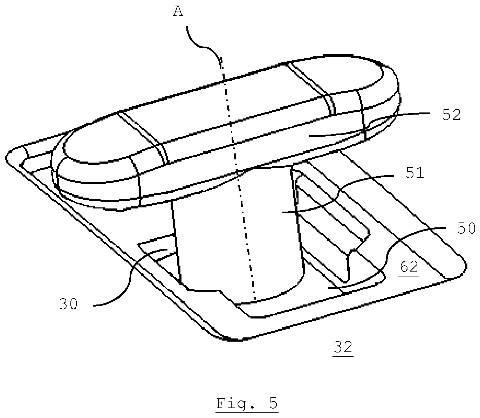

Ensuite, il faut tourner l'élément de fixation 5 sur lui-même autour de son axe A, ici d'un angle de 90° comme visible en figure 5, en maintenant la base 50 contre la surface intérieure 31. En faisant cela, chaque branche 53, 53' vient alors se positionner au-dessus de chaque aile, respectivement 40, 40' : l'enjoliveur est alors bloqué ; il n'est plus possible de tirer l'enjoliveur vers le haut (sur les figures) car les branches s'opposent à ce mouvement.

Ainsi, la tête 52 ne peut passer par le trou 30 que lorsque les branches 53, 53' sont alignés selon la longueur du trou 30 ; par contre, lorsque l'élément de fixation 5 est tournée de 90 ° par rapport à cette position, les branches 53, 53' ne peuvent pas passer par le trou 30.

Pour faciliter la rotation de l'élément de fixation sur lui-même, il est possible de prévoir en dessous de la base 50 une rainure 54 dans laquelle peut être glissée l'extrémité d'un tournevis par exemple.

Les figures 1 et 2 montrent que le trou 30 est situé sous les ailes 40, 40', avec son axe à peu près à égale distance des extrémités des ailes et les branches 53, 53' sont de même longueur et sont symétriques l'une de l'autre par rapport à un plan passant par l'axe A. Ainsi, il est possible de tourner l'élément de fixation dans un sens ou dans l'autre autour de l'axe A ; il n'y a pas de sens privilégié.

## Revendications

1. Vitrage (1) comprenant un élément vitré (2), au moins une portion de joint profilé (3), au moins une pièce rapportée (4) telle qu'un enjoliveur, et au moins un élément de fixation (5) pour la fixation de ladite pièce rapportée (4) à ladite portion de joint profilé (3), ladite pièce rapportée (4) présentant une face intérieure (41) comportant des ailes de retenue (40, 40') **en ce que** ladite portion de joint profilé (3) comporte sous ladite pièce rapportée (4) au moins un trou (30) débouchant sur une face intérieure (31) et sur une face extérieure (32) dudit joint, ledit trou étant plus long que large,
**en ce que** ledit élément de fixation (5) présente une base (50), une tête (52) et un tronc (51) disposé entre cette base et cette tête, avec
- le tronc (51) moins large ou aussi large que la largeur l₃₀ du trou (30)
- la tête (52) moins large que la largeur l₃₀ du trou (30) selon une première direction et moins longue que la longueur L₃₀ du trou (30) tout en étant plus longue que la largeur l₃₀ du trou (30) selon une seconde direction
- la base (50) plus large que la largeur l₃₀ du trou (30) selon ladite première direction et selon ladite seconde direction
- ladite première direction et ladite seconde direction étant dans un même plan et de préférence perpendiculaires dans ce plan
**en ce que** la longueur L₅₂ de la tête (52) est supérieure à la distance d₄₀ entre les extrémités latérales des ailes de retenue (40, 40') afin que ladite tête (52) retienne selon sa longueur lesdites ailes de retenue (40, 40') en direction de la surface extérieure (32) de ladite portion de joint profilé (3) **caractérisé en ce que** ledit trou (30) présentant en surface intérieure (31) deux creux (36 ; 36'), afin de réaliser une zone d'accueil pour la base (50) de l'élément de fixation qui soit en retrait en direction de la pièce rapportée (4) pour bloquer la base (50) en rotation lorsqu'elle est située dans cette zone d'accueil.

2. Vitrage (1) suivant la revendication 1, **caractérisé en ce que** ledit tronc (51) présente un axe (A) et présente une forme circulaire en coupe perpendiculairement à cet axe.

3. Vitrage (1) suivant la revendication 1 ou 2, **caractérisé en ce que** lesdits creux (36 ; 36'), sont en vis-à-vis selon la largeur dudit trou (30).

4. Vitrage (1) suivant l'une quelconque des revendications 1 à 3, **caractérisé en ce que** ledit trou (30) présente un pourtour réalisé par une pièce de pourtour (6) différente dudit joint profilé (3).

5. Vitrage (1) suivant la revendication 4, **caractérisé en ce que** ladite pièce de pourtour (6) présente deux creux en surface intérieure (61), de préférence en vis-à-vis selon la largeur dudit trou (30) et deux creux (66 ; 66') en surface extérieure (62), de préférence en vis-à-vis selon la largeur dudit trou (30).

6. Vitrage (1) suivant l'une quelconque des revendications 1 à 5, **caractérisé en ce que** ladite pièce rapportée (4) présente une forme générale d'arc ou de U avec une partie centrale et une partie en retour à chaque extrémité de la partie centrale **et en ce que** ledit vitrage comporte au moins deux trous (30) et au moins deux pièces rapportées (4) avec au moins une paire trou (30) / pièce rapportée (4) pour chaque partie en retour.

7. Procédé de fabrication d'un vitrage (1), suivant l'une quelconque des revendications 1 à 6, ledit vitrage comprenant un élément vitré (2), au moins une portion de joint profilé (3), au moins une pièce rapportée (4) telle qu'un enjoliveur, et au moins un élément de fixation (5) pour la fixation de ladite pièce rapportée (4) à ladite portion de joint profilé (3), **caractérisé en ce que** ladite tête (52) dudit élément de fixation (5) est passée par le trou (30) de ladite portion de joint profilé (3), puis l'élément de fixation (5) est tourné sur lui-même, et ledit trou (30) présentant en surface intérieure (31) deux creux (36 ; 36'), afin de réaliser une zone d'accueil pour la base (50) de l'élément de fixation qui soit en retrait en direction de la pièce rapportée (4) pour bloquer la base (50) en rotation lorsqu'elle est située dans cette zone d'accueil.

8. Procédé suivant la revendication 7, **caractérisé en ce que** pour passer ladite tête (52) dans ledit trou (30), ladite tête (52) est introduite par le trou en surface intérieure (32) pour ressortir par le trou en surface extérieure (31).

9. Procédé suivant la revendication 7 ou 8, **caractérisé en ce que** l'élément de fixation (5) est tourné sur lui-même d'un angle de 90 °.

## Patentansprüche

1. Verglasung (1) mit einem Verglasungselement (2), mindestens einem Profildichtungsabschnitt (3), mindestens einem Einsatz (4), wie einer Blende, und mindestens einem Befestigungselement (5) zur Befestigung des Einsatzes (4) an dem Profildichtungsabschnitt (3), wobei der Einsatz (4) eine Innenfläche (41) aufweist, die Halteflügel (40, 40') umfasst, **wobei**
der Profildichtungsabschnitt (3) unter dem Einsatz (4) mindestens ein Loch (30) umfasst, das auf einer Innenfläche (31) und auf einer Außenfläche (32) der Dichtung mündet, wobei das Loch länger als breit ist,
**wobei** das Befestigungselement (5) eine Basis (50), einen Kopf (52) sowie einen Rumpf (51), der zwischen dieser Basis und diesem Kopf angeordnet ist, aufweist, wobei
- der Rumpf (51) weniger breit oder so breit wie die Breite l₃₀ des Lochs (30) ist
- der Kopf (52) weniger breit als die Breite l₃₀ des Lochs (30) entlang einer ersten Richtung, und weniger lang als die Länge L₃₀ des Lochs (30) ist, wobei er länger als die Breite l₃₀ des Lochs (30) entlang einer zweiten Richtung ist
- wobei die Basis (50) entlang der ersten Richtung und entlang der zweiten Richtung breiter als die Breite l₃₀ des Lochs (30) ist
- wobei die erste Richtung und die zweite Richtung in derselben Ebene und vorzugsweise senkrecht in dieser Ebene liegen
**wobei** die Länge L₅₂ des Kopfs (52) größer ist als der Abstand d₄₀ zwischen den seitlichen Enden der Haltefllügel (40, 40'), damit der Kopf (52) entlang seiner Länge die Halteflügel (40, 40') in Richtung der Außenfläche (32) des Profildichtungsabschnitts (3) zurückhält
**dadurch gekennzeichnet, dass**
das Loch (30) auf der Innenfläche (31) zwei Vertiefungen (36; 36') aufweist, um eine Aufnahmezone für die Basis (50) des Befestigungselements herzustellen, die in Richtung des Einsatzes (4) zurückgesetzt ist, um die Basis (50) in Drehung zu blockieren, wenn sie sich in dieser Aufnahmezone befindet.

2. Verglasung (1) nach Anspruch 1, **dadurch gekennzeichnet, dass** der Rumpf (51) eine Achse (A) aufweist und eine Kreisform im Schnitt senkrecht zu dieser Achse aufweist.

3. Verglasung (1) nach Anspruch 1 oder 2, **dadurch gekennzeichnet, dass** die Vertiefungen (36; 36') der Breite des Lochs (30) gegenüberliegen.

4. Verglasung (1) nach einem der Ansprüche 1 bis 3, **dadurch gekennzeichnet, dass** das Loch (30) einen Umfang aufweist, der durch ein von dem Profildichtungsabschnitt (3) unterschiedliches Umfangsteil (6) hergestellt wird.

5. Verglasung (1) nach Anspruch 4, **dadurch gekennzeichnet, dass** das Umfangsteil (6) zwei Vertiefungen an der Innenfläche (61), die vorzugsweise entlang der Breite des Lochs (30) in Gegenüberlage sind, und zwei Vertiefungen (66, 66') an der Außenfläche (62), die vorzugsweise in Gegenüberlage entlang der Breite des Lochs (30) sind.

6. Verglasung (1) nach einem der Ansprüche 1 bis 5, **dadurch gekennzeichnet, dass** der Einsatz (4) eine allgemeine Bogen- oder U-Form mit einem zentralen Teil und einem Rücklaufteil an jedem Ende zentralen Teils aufweist, **und dass** die Verglasung mindestens zwei Löcher (30) und mindestens zwei Einsätze (4) mit mindestens einem Paar aus Loch (30)/Einsatz (4) für jedes Rücklaufteil umfasst.

7. Verfahren zur Herstellung einer Verglasung (1) nach einem der Ansprüche 1 bis 6, wobei die Verglasung ein Verglasungselement (2), mindestens einen Profildichtungsabschnitt (3), mindestens einen Einsatz (4), wie eine Blende, und mindestens ein Befestigungselement (5) zur Befestigung des Einsatzes (4) an dem Profildichtungsabschnitt (3) umfasst, **dadurch gekennzeichnet, dass** der Kopf (52) des Befestigungselements (5) durch das Loch (30) des Profildichtungsabschnitts (3) hindurchgeführt wird, dann das Befestigungselement (5) um sich selbst gedreht wird, und wobei das Loch (30) auf der Innenfläche (31) zwei Vertiefungen (36; 36') aufweist, um eine Aufnahmezone für die Basis (50) des Befestigungselements herzustellen, die in Richtung des Einsatzes (4) zurückgesetzt ist, um die Basis (50) in Drehung zu blockieren, wenn sie sich in dieser Aufnahmezone befindet.

8. Verfahren nach Anspruch 7, **dadurch gekennzeichnet, dass** der Kopf (52) zum Hindurchführen des Kopfs (52) in das Loch (30) durch das Loch auf der Innenfläche (32) eingeführt wird, um durch das Loch um der Außenfläche (31) wieder auszutreten.

9. Verfahren nach Anspruch 7 oder 8, **dadurch gekennzeichnet, dass** das Befestigungselement (5) in einem 90°-Winkel auf sich selbst gedreht wird.

## Claims

1. A window (1) including a glazing element (2), at least one profiled joint portion (3), at least one insert (4) such as a trim element, and at least one attachment element (5) for attaching said insert (4) to said profiled joint portion (3), said insert (4) having an internal face (41) with retaining flanges (40, 40'),
**in that** said profiled joint portion (3) includes, beneath said insert (4), at least one hole (30) opening onto an inside face (31) and an outside face (32) of said joint, said hole being longer than it is wide,
**in that** said attachment element (5) has a base (50), a head (52) and a body (51) arranged between this base and this head, in which
- the body (51) is no wider than the width l₃₀ of the hole (30)
- the head (52) is narrower than the width l₃₀ of the hole (30) in a first direction and shorter than the length L₃₀ of the hole (30), while being longer than the width l₃₀ of the hole (30) in a second direction
- the base (50) is wider than the width l₃₀ of the hole (30) in said first direction and in said second direction
- said first direction and said second direction are in the same plane and preferably perpendicular in this plane
**in that** the length L₅₂ of the head (52) is greater than the distance d₄₀ between the lateral extremities of the retaining flanges (40, 40') such that said head (52) holds, along the length thereof, said retaining flanges (40, 40') in the direction of the outside surface (32) of the profiled bead portion (3),
**characterized in that** said hole (30) has in the inside surface (31) two recesses (36; 36'), in order to create a seat for the base (50) of the attachment element that is recessed in the direction of the insert (4) for preventing the base (50) from rotating when it is in this seat.

2. The window (1) as claimed in claim 1, **characterized in that** said body (51) has an axis (A) and the cross-section perpendicular to this axis is circular.

3. The window (1) as claimed in claim 1 or 2, **characterized in that** said recesses (36; 36') are facing one another across the width of said hole (30).

4. The window (1) as claimed in any one of claims 1 to 3, **characterized in that** said hole (30) has a perimeter made of a perimeter part (6) that is separate from the profiled joint (3).

5. The window (1) as claimed in claim 4, **characterized in that** said perimeter part (6) has two recesses on the inside surface (61), which are preferably facing one another across the width of said hole (30) and two recesses (66; 66') on the outside surface (62), preferably facing one another across the width of said hole (30).

6. The window (1) as claimed in any one of claims 1 to 5, **characterized in that** said insert (4) has an overall arc or U shape with a central part and a return part at each extremity of the central part **and in that** said window has at least two holes (30) and at least two inserts (4) with at least one hole (30)/insert (4) pair for each return part.

7. A method for manufacturing a window (1), as claimed in any one of claims 1 to 6, said window including a glazing element (2), at least one profiled joint portion (3), at least one insert (4) such as a trim element, and at least one attachment element (5) for attaching said insert (4) to said profiled joint portion (3), **characterized in that** said head (52) of said attachment element (5) is passed through the hole (30) of said profiled joint portion (3), then the attachment element (5) is turned about itself and the hole (30) having in the inside surface (31) two recesses (36; 36'), in order to create a seat for the base (50) of the attachment element that is recessed in the direction of the insert (4) for preventing the base (50) from rotating when it is in this seat.

8. The method as claimed in claim 7, **characterized in that** to pass said head (52) through said hole (30), said head (52) is inserted into the hole via the inside surface (32) to come out of the hole via the outside surface (31).

9. The method as claimed in claim 7 or 8, **characterized in that** the attachment element (5) is turned around itself by an angle of 90°.
